# EUROPEAN PATENT SPECIFICATION

(11) **EP 3 752 033 B1**
(45) Date of publication and mention of the grant of the patent: **23.08.2023**
(21) Application number: 19770474.5
(22) Date of filing: 14.03.2019
(51) Int. Cl.: A47J 31/44, B65D 85/804

(54) **DOMESTIC EXTRACTING MACHINE FOR HERBS CAPSULE**
HAUSHALTEXTRAKTIONSMASCHINE FÜR KRÄUTERKAPSEL
MACHINE D'EXTRACTION DOMESTIQUE POUR CAPSULE D'HERBES

(30) Priority: 21.03.2018 IL 25828718
(43) Date of publication of application: 23.12.2020
(73) Proprietor: Leb, David, Panama (PA); Bivas, Assaf, Pardes Hana (IL)
(72) Inventor: Leb, David, Panama (PA); Bivas, Assaf, Pardes Hana (IL)
(74) Representative: Lapienis, Juozas
(86) International application number: PCT/IL2019/050285
(87) International publication number: WO 2019/180697

(56) References cited:
- WO-A1-2014/037733
- WO-A2-2013/192415
- AU-A1- 2014 352 005
- FR-A1- 2 956 865
- JP-A- 2004 301 749
- JP-A- 2016 054 893
- US-A1- 2015 223 523
- US-A1- 2017 280 924

## Description

### TECHNICAL FIELD

The present invention refers to a domestic extracting machine for herbs capsules.

### BACKGROUND ART

There are many types of herbs that users wish to consume their extract by vaporization process, such as tobacco, cannabis, chamomile, lavender, green tea, and others. Document WO 2013/192415 A2 (see Fig. 3) discloses a domestic extraction machine for steam-extracting herbs contained in a capsule, comprising a capsule-compartment, a condensation-compartment, and a control mechanism.

The present patent application discloses a domestic extracting machine that enables users to extract herbs contained in capsules.

### DESCRIPTION OF THE DRAWINGS

The intention of the drawings attached to the application is not to limit the scope of the invention and its application. The drawings are intended only to illustrate the invention and they constitute only one of its many possible implementations.
FIGS 1 and 2 depict the appearance of the domestic extracting machine (1).
FIG. 3 depicts the capsule (100).
FIG. 4 is a schematic description of the capsule (100) inside the capsule compartment.
FIG. 5 is a schematic depiction of the upper rim (108) with two pins (1081) and the peripheral recess (25) with two holes (251).
FIG. 6 is a schematic depiction of the domestic extracting machine (1).
FIG, 7 depicts a rear view of the domestic extracting machine (1).

### THE INVENTION

The object of the present invention is to provide a domestic extracting machine (1) from herbs, which is designed to extract herbs contained in a capsule. The machine (1) is designed to serve mainly for personal use when a user needs a small amount of extract from relatively small capsule and not industrially.

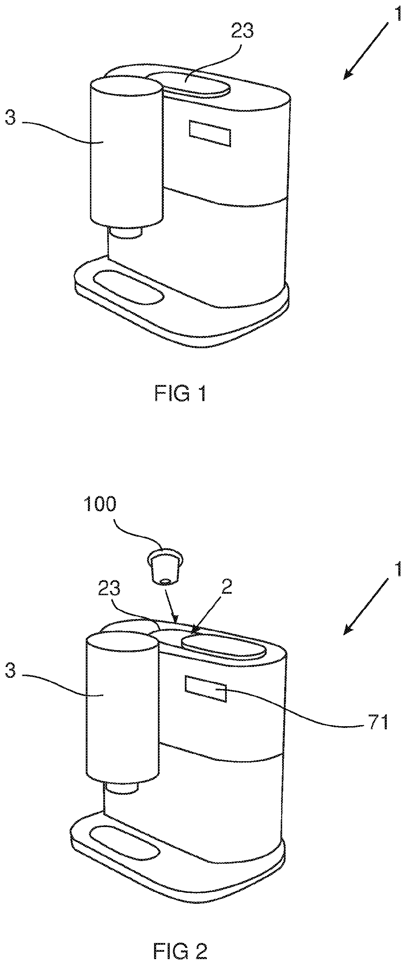

The domestic extracting machine (1) includes a capsule-compartment (2), a condensation-compartment (3), an air blower (4), a heating mechanism (5), a stirring mechanism (6) and a cutting means (9) such as a knife or any rigid object that capable to cut a paper cover of the capsule. The domestic extracting machine (1) also includes a control mechanism (7) and a power source (8), which may be an inner battery or a connection to external power source. Figures 1 and 2 describe a possible exterior appearance of the domestic extracting machine (1).

The capsule (100), which is preferably be made of stainless steel paper, possible with a thickness of 0.05 millimeters, is designed to contain herb (101).

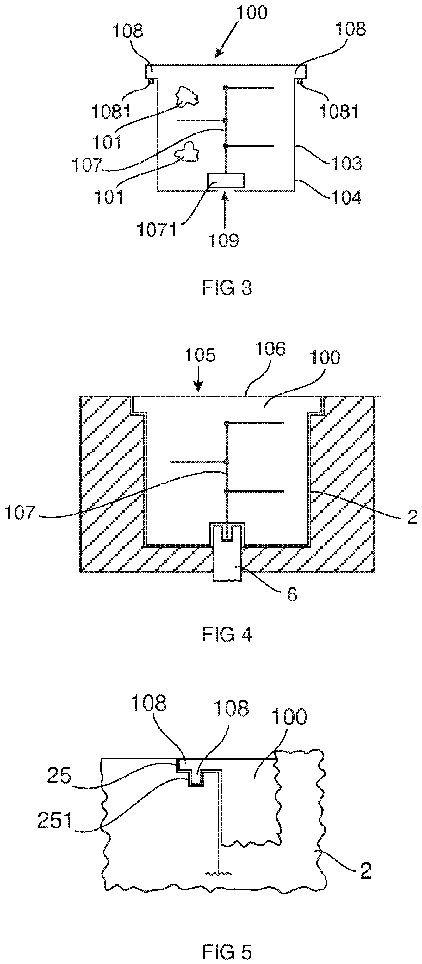

The capsule includes perforations (102) on its side wall (103). It is preferably that the perforations (102) will be on the lower part (104) of the capsule (100) possible on the perimeter of its side wall (103) and preferably that their diameter's pores will be of about 200 - 500 microns. The capsule (100) also includes an opening (105) which is closed by a cover (106), preferably made of material that can be easily punctured such as a paper lid. The capsule (100) also includes a stirring arm (107). Figure 3 depicts the capsule (100).

**The capsule-compartment (2)** is designed to receive the capsule (100) and its wall (21) includes hot-air opening (22) through which hot air flows from the air blower (4) into the capsule-compartment (2) and into the capsule (100) through the perforations (102). The capsule-compartment (2) also includes an insert-opening (23), through which the capsule (100) is inserted inside it, and outlet-opening (24) through which the vapors flows from the capsule-compartment (2) into the condensation-compartment (3). The air blower (4) is designed to pump air into the hot-air opening (22) and the heating mechanism (5) is designed to heat that air that is pumped into the hot-air opening (22). Figure 4 is a schematic description of the capsule (100) inside the capsule compartment.

The capsule (100) may include an upper rim (108) that corresponds with a peripheral recess (25) at the upper part of the capsule compartment (2). It is also possible that the upper rim (108) may include one or more pins (1081) that correspond with holes (251) on the peripheral recess (25), as depicted for example in figure 5. When the capsule is inserted into the capsule-compartment, the upper rim of the capsule is positioned in the peripheral recess of the capsule-compartment and the pins (1081) are positioned inside the holes (251), and in addition the stirring mechanism (6) is in connection with the stirring arm (107).

**The stirring mechanism (6),** which is designed to be rotated by a stirring activator (63), is designed to be connected to the stirring arm (107), possible by corresponding pin and hole, preferably that have polygonal structure and not rounded so that the stirring mechanism (6) may easily connect to and rotate the stirring arm (107). The activator (63) is designed to rotate the stirring mechanism (6) that in turns rotates the stirring arm (107) that whirl the herbs (101) in the capsule (100), while the hot air flow from the air blower (4) through the capsule (100) into the condensation-compartment (3).

The hot air that flows through the capsule (100) heats the herbs (101) to a temperature where it does not burn (combust), but reaches a temperature high enough to release from the herbs vapors with their active ingredients, that includes also dirt particles, and these vapors flow into the condensation-compartment (3).

**The condensation-compartment (3)** includes condensation mechanism (31), which is designed to thicken the vapors that contain the active ingredients of the herbs and turn them into a liquid state such as drops or wax. The condensation-compartment (3) also includes a collection tray (32) that receive the extract of the herbs as drops or wax from the condensation mechanism (31). The condensation-compartment (3) is also includes a sweeper mechanisms (33) that collect and drainage the dirt from the vapors, and an air filter (34) that filter the air that flow outside through air outlet opening (341).

The structures of condensation mechanisms and condensers are known in the art and it seems that it is not necessary to detail this condensation mechanism (31), which may include for example cooling devices or cooling ribs or a pipe that may include such ribs. In general, the process in the condensation-compartment (3) includes the condensing of the vapors into drops or wax and releasing the air outside through the air filter.

**The control mechanism (7)** controls the operation of the domestic extracting machine (1) and its components. The control mechanism (7) controls the temperature of the hot air, may control the pressure of the hot air that flows into the capsule (100), activates the stirring mechanism (6), and the time period of the extracting process each time, possible, according the kind of herbs in the capsule and according the preference of the user to receive the extract as drops or as wax. The control mechanism (7) may include touch screen (71) for controlling the machine and processor.

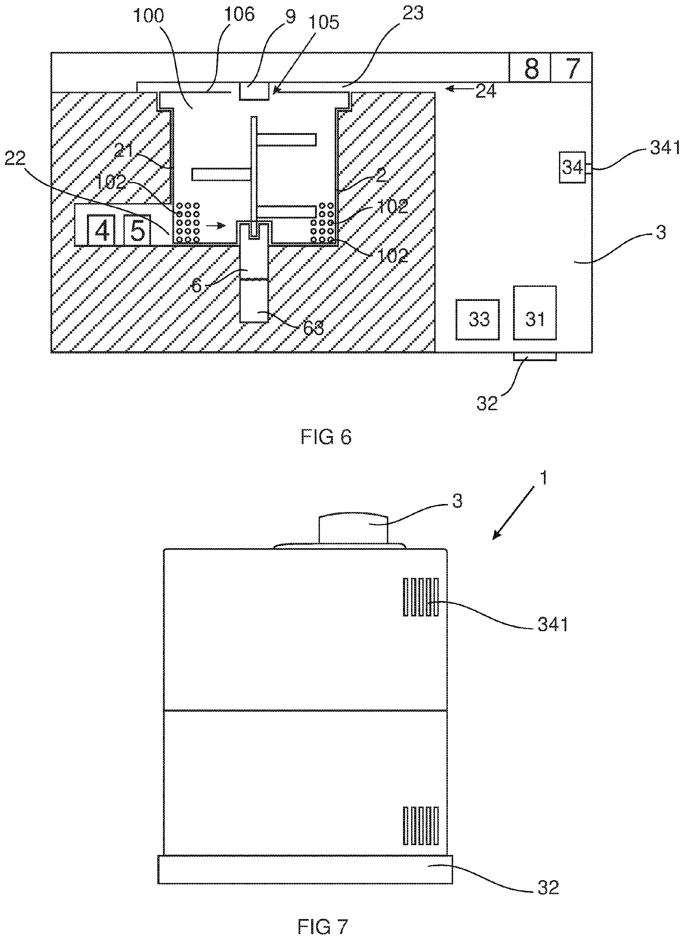

**Operation of the domestic extracting machine (1):** the user inserts the capsule (100) into the capsule-compartment (2) and closes the cover of this compartment, which may designed for example as a sliding drawer; the user sets the parameters of the extracting process by the control mechanisms (7); the stirring mechanism (6) rotates the stirring arm (107) that whirls the herbs inside the capsule while the air blower and the heating mechanism pump hot air under a certain pressure into the capsule; the vapors flows into the condensation-compartment in which the vapors turns into drops or wax that contain the active ingredients of the herbs. In the end of the process the user can remove the capsule and insert a new one for the next need. Figure 6 is a schematic depiction of the domestic extracting machine (1) and its components, and figure 7 depicts a rear view of the domestic extracting machine (1).

## Claims

1. A domestic extracting machine (1) that is designed to extract herbs contained inside a capsule (100), comprising: a capsule-compartment (2) that is designed to receive the capsule, a condensation-compartment (3), an air blower (4), a heating mechanism (5), a stirring mechanism (6), a stirring activator (63), and a control mechanism (7);
wherein said capsule-compartment (2) includes a hot-air hole (22) through which hot air can flow from the air blower (4) into the capsule-compartment (2) and into the capsule through perforations (102) in the capsule, wherein the capsule-compartment (2) also includes an outlet-opening (24) through which vapors can flow from the capsule into the condensation-compartment (3);
wherein the stirring activator (63) is designed to rotate the stirring mechanism (6) that in turns can rotate a stirring arm (107) that is positioned inside the capsule and by that to whirl the herbs (101) inside the capsule (100);
wherein the air blower (4) is designed to blow air that can be heated by the heating mechanism, wherein the hot air can flow through the capsule (100) and heat and vaporize the herbs (101) wherein the vapors include active ingredients that can flow into the condensation-compartment (3);
wherein the condensation-compartment (3) includes condensation mechanism (31) that is designed to thicken the vapors and turn them into a liquid state such as drops or wax;
wherein said control mechanism (7) is designed to control the operation of the domestic extracting machine (1) and its components; and
wherein the condensation-compartment (3) further includes a drainage and sweeper mechanisms (33) that is designed to collect and drainage dirt from the vapors, and further includes an air filter (34) for filtering the air that flows outside through air outlet opening (341).

2. A capsule (100) containing herbs (101) that corresponds with a domestic extracting machine (1) that is designed to extract the herbs, wherein the capsule includes an opening (105) which is closed by a cover (106), and wherein the capsule includes perforations (102) on a side wall (103) of the capsule that are designed to enable hot air from the domestic extracting machine (1) to flow inside the capsule (100) and a stirring arm (107) inside the capsule that is designed to be rotated by a stirring mechanism (6) of the domestic extracting machine (1).

## Patentansprüche

1. Eine Haushaltsextraktionsmaschine (1) zur Extraktion von Kräutern, die in einer Kapsel (100) enthalten sind, umfassend: eine Kapselkammer (2) zur Aufnahme der Kapsel, eine Kondensationskammer (3), ein Luftgebläse (4), einen Heizmechanismus (5), einen Rührmechanismus (6), einen Rühraktivator (63) und einen Steuermechanismus (7);
wobei die Kapselkammer (2) eine Heißluftöffnung (22) aufweist, durch die heiße Luft von dem Luftgebläse (4) in die Kapselkammer (2) und in die Kapsel durch Perforationen (102) in der Kapsel strömen kann, wobei die Kapselkammer (2) auch eine Auslassöffnung (24) aufweist, durch die Dämpfe von der Kapsel in die Kondensationskammer (3) strömen können;
wobei der Rühraktivator (63) ausgebildet ist, um den Rührmechanismus (6) zu drehen, der seinerseits einen Rührarm (107) drehen, der im Inneren der Kapsel angeordnet ist, und dadurch die Kräuter (101) im Inneren der Kapsel (100) verwirbeln kann;
wobei das Luftgebläse (4) ausgebildet ist, um Luft zu blasen, die durch den Heizmechanismus erhitzt werden kann, wobei die heiße Luft durch die Kapsel (100) strömen und die Kräuter (101) erhitzen und verdampfen kann, wobei die Dämpfe Wirkstoffe enthalten, die in die Kondensationskammer (3) strömen können;
wobei die Kondensationskammer (3) einen Kondensationsmechanismus (31) aufweist, der ausgebildet ist, um die Dämpfe zu eindicken und sie in einen flüssigen Zustand wie Tropfen oder Wachse zu überführen;
wobei der Steuermechanismus (7) ausgebildet ist, um den Betrieb der Haushaltsextraktionsmaschine (1) und ihre Komponenten zu steuern;
und
wobei die Kondensationskammer (3) ferner einen Entwässerungs- und Kehrmechanismus (33) aufweist, der ausgebildet ist, um Schmutz aus den Dämpfen zu sammeln und entwässern, und ferner einen Luftfilter (34) zur Filterung der Luft aufweist, die durch die Luftauslassöffnung (341) nach außen strömt.

2. Eine Kapsel (100) mit Kräutern (101), die mit einer Haushaltsextraktionsmaschine (1) korrespondiert, die zur Extraktion von Kräutern ausgebildet ist, wobei die Kapsel eine Öffnung (105) aufweist, die durch einen Deckel (106) verschlossen ist, und wobei die Kapsel Perforationen (102) an einer Seitenwand (103) der Kapsel aufweist, die so ausgebildet sind, dass heiße Luft von der Haushaltsextraktionsmaschine (1) in das Innere der Kapsel (100) strömen kann, und einen Rührarm (107) im Inneren der Kapsel, der dazu ausgebildet ist, von einem Rührmechanismus (6) der Haushaltsextraktionsmaschine (1) gedreht zu werden.

## Revendications

1. Un extracteur (1) domestique destiné à extraire des herbes contenues à l'intérieur d'une capsule (100), comprenant: un compartiment (2) à capsule destiné à recevoir la capsule, un compartiment (3) à condensation, un souffleur (4) d'air, un mécanisme (5) de chauffage, un mécanisme (6) d'agitation, un activateur (63) d'agitation et un mécanisme (7) de commande;
dans lequel ledit compartiment (2) de capsule comprend un trou (22) d'air chaud à travers lequel l'air chaud peut s'écouler depuis le souffleur (4) d'air dans le compartiment (2) de capsule et dans la capsule à travers des perforations (102) dans la capsule, dans lequel le compartiment (2) de capsule comprend également une ouverture (24) de sortie à travers laquelle les vapeurs peuvent s'écouler de la capsule dans le compartiment (3) à condensation;
dans lequel l'activateur (63) d'agitation est conçu pour faire tourner le mécanisme (6) d'agitation qui à son tour peut faire tourner un bras (107) d'agitation positionné à l'intérieur de la capsule et ainsi faire tourbillonner les herbes (101) à l'intérieur de la capsule (100);
dans lequel le souffleur (4) d'air est conçu pour souffler de l'air qui peut être chauffé par le mécanisme de chauffage, dans lequel l'air chaud peut circuler à travers la capsule (100) et chauffer et vaporiser les herbes (101), dans lequel les vapeurs comprennent des ingrédients actifs qui peuvent s'écouler dans le compartiment (3) à condensation;
dans lequel le compartiment (3) à condensation comprend un mécanisme (31) de condensation qui est conçu pour condenser les vapeurs et les transformer en un état liquide tel que des gouttes ou de la cire;
dans lequel ledit mécanisme (7) de commande est conçu pour commander le fonctionnement de l'extracteur (1) domestique et de ses composants;
et
dans lequel le compartiment (3) à condensation comprend en outre un mécanisme (33) de drainage et de balayage qui est conçu pour collecter et évacuer la saleté des vapeurs, et comprend en outre un filtre (34) d'air pour filtrer l'air qui s'écoule à l'extérieur à travers l'ouverture (341) de sortie d'air.

2. Une capsule (100) contenant des herbes (101) qui correspond à l'extracteur (1) domestique conçue pour extraire les herbes, dans laquelle la capsule comprend une ouverture (105) qui est fermée par un couvercle (106), et dans laquelle la capsule comprend des perforations (102) sur une paroi (103) latérale de la capsule qui sont conçues pour permettre à l'air chaud de l'extracteur (1) domestique de circuler à l'intérieur de la capsule (100), et un bras d'agitation (107) à l'intérieur de la capsule qui est conçu pour être tourné par un mécanisme (6) d'agitation de l'extracteur (1) domestique.
